# EUROPEAN PATENT APPLICATION

(11) **EP 3 309 921 A1**
(43) Date of publication of application: **18.04.2018**
(21) Application number: 15894907.3
(22) Date of filing: 09.06.2015
(51) Int. Cl.: H02J 3/32, H02J 3/46, H02J 7/00

(54) **CHARGING SYSTEM**

(71) Applicant: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: YAMANE, Fumiyuki, Tokyo 105-8001 (JP)
(74) Representative: Awapatent AB
(86) International application number: PCT/JP2015/066604
(87) International publication number: WO 2016/199222

(57) **Abstract**

A charging system according to an embodiment includes charging units, a controller that controls the charging units, and a manager that manages storage battery of each of the charging units with partitioning the storage battery into blocks in a unit of given electric energy. The manager assigns a first state, a second state, or a third state to each of the blocks, and outputs, when the charging units includes a first charging unit including a first block to which the first state is assigned, an instruction to the controller such that power stored in the first block is distributed to a second charging unit other than the first charging unit via the trunk distribution line, the first state indicating no use by the charging units, the second state indicating a use by any of the charging units, the third state indicating no storage of usable power.

## Description

### FIELD

Embodiments of the present invention relate to a charging system.

### BACKGROUND

Conventionally, there has been known a charging system including a plurality of charging units for charging vehicles such as electric cars.

### CITATION LIST

### Patent Literature

Patent Literature 1: Japanese Laid-open Patent Publication No. 2011-211891

### SUMMARY OF THE INVENTION

### Problem to be Solved by the Invention

In the above-mentioned conventional technique, when electric energy stored in one charging unit to which a vehicle is connected is smaller than electric energy necessary for charging the vehicle, the vehicle is charged after the charging unit is charged until it stores therein necessary electric energy by taking the time, or the vehicle is operated with its charged amount smaller than the necessary electric energy, in some cases. That is, the conventional technique lacks efficiency and reliability of charging of the vehicles in some cases.

### Means for Solving Problem

A charging system comprises a plurality of charging units, a controller, and a manager. The charging units are electrically connected to each other via a trunk distribution line, and each of the charging units comprises a connector to which a vehicle is connected, a storage battery that stores therein power supplied from the trunk distribution line, and a charger that supplies power supplied from the trunk distribution line or the storage battery to the vehicle through the connector. The controller controls the charging units. The manager manages the storage battery of each of the charging units with partitioning the storage battery into a plurality of blocks in a unit of given electric energy. The manager assigns a first state, a second state, or a third state to each of the blocks, and outputs, when the charging units includes a first charging unit including a first block to which the first state is assigned, an instruction to the controller such that power stored in the first block is distributed to a second charging unit other than the first charging unit via the trunk distribution line. The first state indicates no use by the charging units. The second state indicates a use by any of the charging units. The third state indicates no storage of usable power.

### BRIEF DESCRIPTION OF DRAWINGS

FIG. 1 is a block diagram illustrating an example of an overall configuration of an EV charging system according to an embodiment.
FIG. 2 is a block diagram illustrating an example of an internal configuration of each of storage batteries of the EV charging system in the embodiment.
FIG. 3 is a diagram for explaining an example of states 1 to 4 that are assigned to respective blocks of the storage batteries of the EV charging system in the embodiment.
FIG. 4 is a flowchart illustrating an example of processing flow that a charge/discharge instruction generator executes when power is distributed among charging units in the EV charging system in the embodiment.
FIG. 5 is a flowchart illustrating an example of processing flow that the charge/discharge instruction generator executes when the charging unit is charged in the EV charging system in the embodiment.
FIG. 6 is a flowchart illustrating an example of processing flow that the charge/discharge instruction generator executes when the states are updated in the EV charging system in the embodiment.
FIG. 7 is a flowchart illustrating an example of processing flow that a controller of the EV charging system executes in the embodiment.

### DETAILED DESCRIPTION

Hereinafter, an embodiment will be described with reference to the drawings.

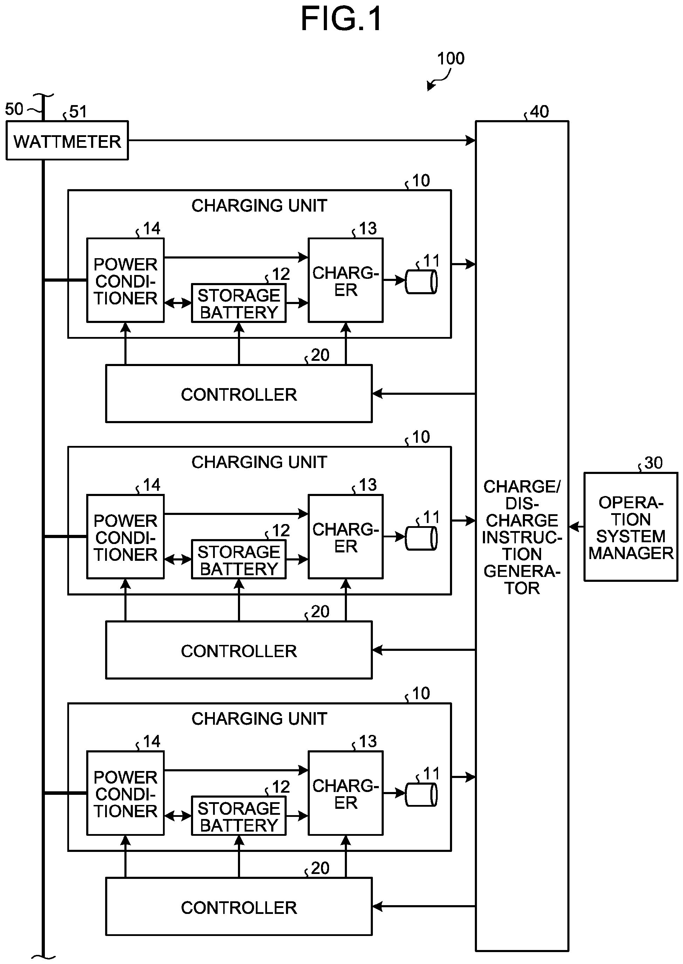

First, an example of the configuration of an electronic vehicle (EV) charging system 100 in the embodiment will be described with reference to FIG. 1 to FIG. 3. Hereinafter, the EV charging system 100 that is installed at a charging point of electric buses as an example of EVs will be described.

As illustrated in FIG. 1, the EV charging system 100 includes a plurality of charging units 10, a plurality of controllers 20, an operation system manager 30, and a charge/discharge instruction generator 40. The charge/discharge instruction generator 40 is an example of a "manager". In the embodiment, the operation system manager 30 and the charge/discharge instruction generator 40 may be implemented in one computer, or the operation system manager 30 and the charge/discharge instruction generator 40 may be implemented in different computers. Although FIG. 1 illustrates an example in which the number of charging units 10 is three, the number of charging units 10 may be two or equal to or more than four in the embodiment.

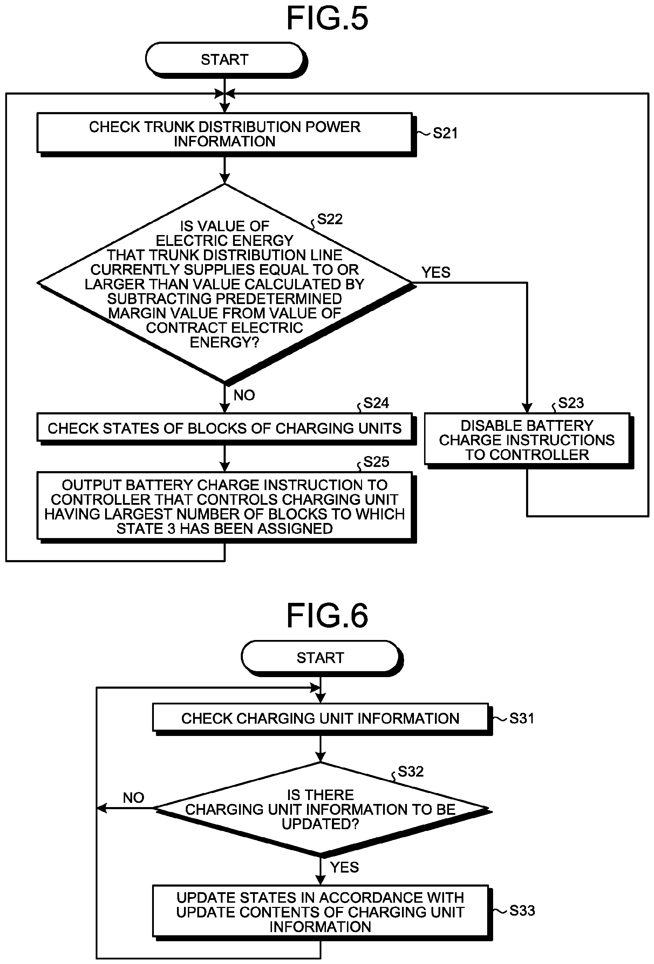

The charging units 10 are electrically connected to one another via a trunk distribution line (power line) 50. A wattmeter 51 is provided on the trunk distribution line 50. The wattmeter 51 measures electric energy that the trunk distribution line 50 currently supplies. The wattmeter 51 outputs, to the charge/discharge instruction generator 40, a measured value of the electric energy and the like, as trunk distribution power information. A usage manner of the trunk distribution power information will be described in detail in description of processing flow illustrated in FIG. 5, which will be described later, and the description thereof is thus omitted here.

Each of the charging units 10 includes a connector 11, a storage battery 12, a charger 13, and a power conditioner 14. The connector 11 is configured to be connectable to a vehicle (not illustrated) such as the electric bus. The storage battery 12 is a secondary battery that can be repeatedly charged and discharged. The storage battery 12 is configured to be capable of storing therein power supplied from the trunk distribution line 50. The charger 13 is configured to be capable of supplying power supplied from the trunk distribution line 50 and the storage battery 12 to the vehicle through the connector 11.

The power conditioner 14 is a device by which power used in the trunk distribution line 50 and power used in the charging unit 10 are adjusted to match with each other. The power conditioner 14 is configured to, for example, convert alternating-current (AC) power in the trunk distribution line 50 to direct current (DC) power in the charging unit 10 and to convert the DC power in the charging unit 10 to the AC power in the trunk distribution line 50. In the embodiment, both of the power used in the trunk distribution line 50 and the power used in the charging unit 10 may be DC power.

The same number (a plurality) of controllers 20 as that of charging units 10 are provided such that the controllers 20 correspond to the respective charging units 10. Each of the controllers 20 controls the storage battery 12, the charger 13, and the power conditioner 14 of the corresponding charging unit 10 on the basis of various instructions input from the charge/discharge instruction generator 40. The various instructions include a vehicle charge instruction for instructing to charge the vehicle (not illustrated) connected to the connector 11, a battery charge instruction for instructing to charge the storage battery 12 with power supplied from the trunk distribution line 50, and a discharge instruction for instructing to discharge power stored in the storage battery 12 to the trunk distribution line 50.

The operation system manager 30 manages an operation system of vehicles that are charged in the EV charging system 100. To be more specific, the operation system manager 30 generates operation information of the vehicles and plan creation triggers and outputs the generated operation information and plan creation triggers to the charge/discharge instruction generator 40. The operation information include operation schedules, operation routes, and various pieces of vehicle information (specification, electricity cost, remaining electric energy, and the like). The plan creation triggers are triggers for causing the charge/discharge instruction generator 40 to execute power distribution control, which will be described later. The plan creation trigger is generated when the vehicle enters the EV charging system 100 serving as the charging point for charging, for example.

The charge/discharge instruction generator 40 outputs, to the controllers 20, various instructions so as to control the charging units 10 corresponding to the controllers 20. In the embodiment, the charge/discharge instruction generator 40 outputs, to the respective controllers 20, various instructions so as to appropriately charge the vehicle when the operation system manager 30 outputs the plan creation trigger upon, for example, entering of the vehicle into the EV charging system 100 serving as the charging point, or the like.

To be more specific, in the case where the vehicle is connected to the certain charging unit 10, when the storage battery 12 of the charging unit 10 alone cannot supply power necessary for charging the vehicle (hereinafter, referred to as necessary electric energy), the charge/discharge instruction generator 40 outputs various instructions to enable charging of the vehicle on reception of distribution of surplus power from the storage battery 12 of another charging unit 10. That is to say, the charge/discharge instruction generator 40 outputs the vehicle charge instruction to the controller 20 controlling the charging unit 10 to which the vehicle is connected, and outputs the discharge instruction to the controller 20 controlling the charging unit 10 as a power distribution source.

The charge/discharge instruction generator 40 outputs various instructions so as to charge the vehicle with the storage battery 12 alone of the charging unit 10 to which the vehicle is connected when the storage battery 12 alone can supply the necessary electric energy. In this case, the charge/discharge instruction generator 40 outputs the vehicle charge instruction to only the controller 20 corresponding to the charging unit 10 to which the vehicle is connected without outputting the discharge instruction to the controllers 20 controlling the other charging units 10 because the other charging units 10 are not required to distribute power unlike the above-mentioned case.

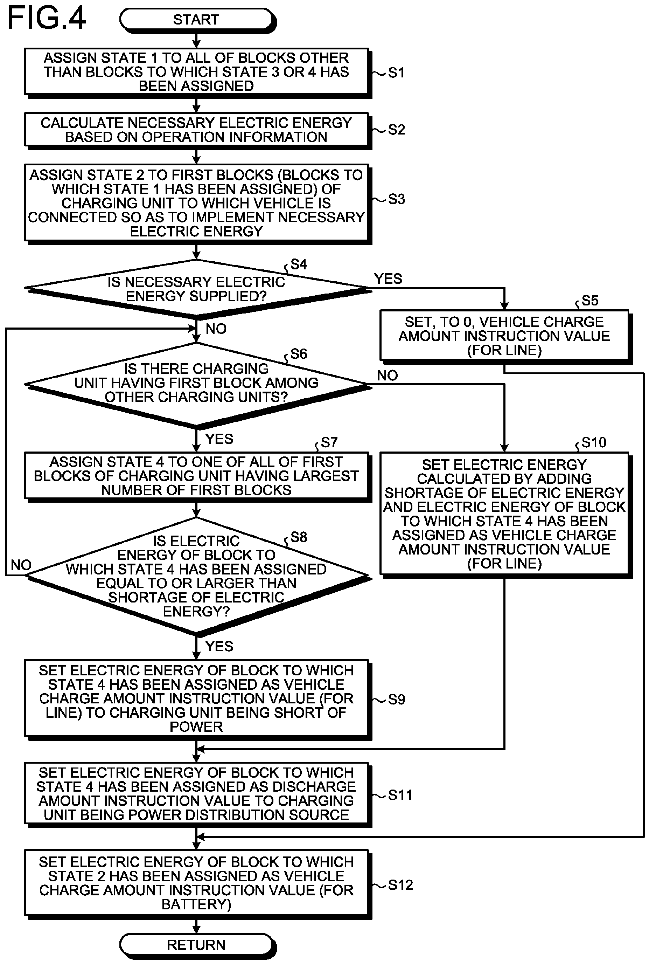

The vehicle charge instruction is output together with a vehicle charge amount instruction value (for line) and a vehicle charge amount instruction value (for battery). The vehicle charge amount instruction value (for the line) is a value indicating the amount of power that is supplied from the trunk distribution line 50. The vehicle charge amount instruction value (for the line) is a value indicating the amount of power that is distributed from another charging unit 10. The vehicle charge amount instruction value (for the line) is set to 0 when the charging unit 10 to which the vehicle is connected alone can supply the necessary electric energy (that is to say, supply of power from the trunk distribution line 50 is not required). The discharge instruction is output together with a discharge amount instruction value indicating the amount of power that is required to be discharged to the trunk distribution line 50 in order to distribute power to another charging unit 10. Calculation and setting manners of the vehicle charge amount instruction value (for the line/battery) will be described in detail in description of processing flow illustrated in FIG. 4, which will be described later, and the description thereof is thus omitted here.

The charge/discharge instruction generator 40 manages the electric energy of each storage battery 12 as follows in order to execute the power distribution control as described above.

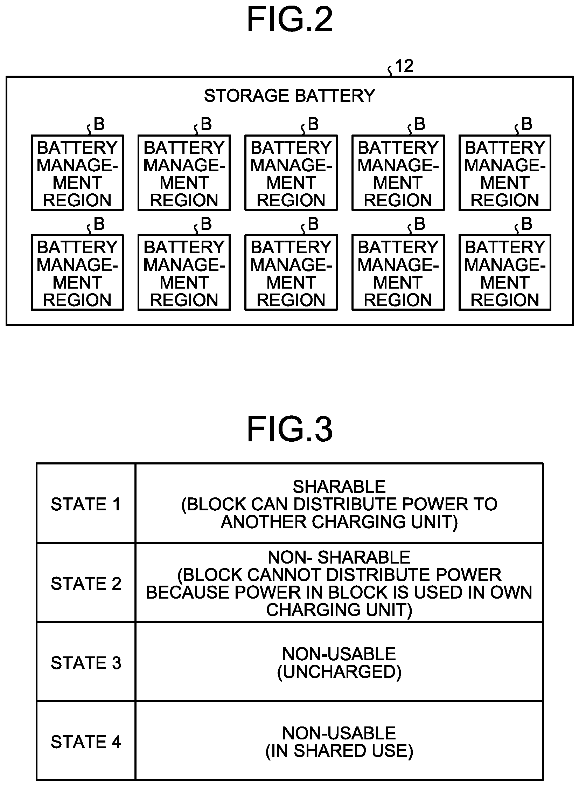

As illustrated in FIG. 2, the charge/discharge instruction generator 40 manages the storage batteries 12 of the respective charging units 10 with partitioning each storage battery 12 into a plurality of battery management regions (hereinafter, simply referred to as blocks) B in a unit of given electric energy. In an example of FIG. 2, one storage battery 12 is partitioned into ten blocks B to be managed, each of which can store 10% of the maximum electric energy that one storage battery 12 can store. In the embodiment, the number of blocks B may be equal to or less than nine or equal to or more than 11. The electric energies of the blocks B may be equal to or different from one another.

The charge/discharge instruction generator 40 assigns, to each of the blocks B, any of four states 1 to 4 (see FIG. 3) differing from one another.

As illustrated in FIG. 3, the state 1 indicates that the block can distribute power to another charging unit 10, that is, the block is sharable. The state 2 indicates that the block cannot distribute power to another charging unit 10, that is, is non-sharable because power in the block is used in the charging unit 10 including the block. The state 3 indicates that the block does not store therein usable power (uncharged), that is, the block is non-usable. The state 4 indicates that the block cannot distribute power anymore (in shared use), that is, the block is non-usable because the block has already distributed power to another charging unit 10. The state 1 is an example of a "first state", the states 2 and 4 are examples of a "second state", and the state 3 is an example of a "third state".

The charge/discharge instruction generator 40 manages the above-mentioned states on the basis of charging unit information input from the charging units 10. The charging unit information is information indicating operation conditions of the storage batteries 12, the chargers 13, and the power conditioners 14, and includes information indicating the remaining capacities of the storage batteries 12 (electric energies in the respective blocks B). The charge/discharge instruction generator 40 is configured to monitor the charging unit information input from the respective charging units 10 and to update the states in accordance with update contents when the charging unit information are updated.

As described above, any one of the state 1, the states 2 and 4, and the state 3 is assigned to each of the blocks B, the state 1 indicating no use by the charging units 10, the states 2 and 4 indicating a use by any of the charging units 10, the state 3 indicating no storage of usable power. With this assignment, the charge/discharge instruction generator 40 can determine whether the storage batteries 12 of the other charging units 10 have surplus power by checking the presence or absence of the block B to which the state 1 has been assigned (hereinafter, referred to as a first block) when executing the above-described power distribution control.

In the embodiment, when there is a plurality of charging units 10 having the first blocks, the charge/discharge instruction generator 40 outputs the vehicle charge instruction and the discharge instruction to the controllers 20 so that power is distributed to another charging unit 10 preferentially from the charging unit 10 having the largest number of first blocks. The charge/discharge instruction generator 40 outputs the battery charge instructions to the controllers 20 so that charging can be performed preferentially from the charging unit 10 having the largest number of blocks to which the third state has been assigned when the storage batteries 12 of the charging units 10 are charged with power supplied from the trunk distribution line 50. In the embodiment, charging and discharging of the storage batteries 12 may be performed separately or simultaneously.

Next, an example of processing flow that the charge/discharge instruction generator 40 executes when power is distributed among the charging units 10 in the EV charging system 100 in the embodiment will be described with reference to FIG. 4. This processing flow is started when the operation system manager 30 generates the plan creation trigger upon, for example, the entering of the vehicle into the EV charging system 100 as the charging point.

In this processing flow, first, as illustrated in FIG. 4, the charge/discharge instruction generator 40 assigns the state 1 to all of the blocks B other than the blocks B to which the state 3 or 4 has been assigned at step S1. That is to say, when there are the blocks B to which the state 2 has been assigned, the charge/discharge instruction generator 40 changes the states of the blocks B from the state 2 to the state 1. This processing is performed on all of the charging units 10 other than the charging unit 10 to which the vehicle has been already connected. Then, the processing proceeds to step S2.

At step S2, the charge/discharge instruction generator 40 calculates the necessary electric energy (electric energy necessary for charging the vehicle that is connected to the charging unit 10) based on the operation information generated by the operation system manager 30. The processing proceeds to step S3.

At step S3, the charge/discharge instruction generator 40 assigns the state 2 to the first blocks (blocks B to which the state 1 has been assigned) of the charging unit 10 to which the vehicle is connected so as to implement the necessary electric energy calculated at step S2. To be more specific, the charge/discharge instruction generator 40 checks the electric energies of all of the first blocks of the charging unit 10 to which the vehicle is connected, and changes the states of the first blocks to the state 2 so that the total electric energy of the blocks B to which the state 2 is assigned can be equal to or larger than the necessary electric energy. After that, the processing proceeds to step S4.

At step S4, the charge/discharge instruction generator 40 determines whether only the blocks B to which the state 2 has been assigned by the processing at step S3 can supply the necessary electric energy.

When it is determined that the necessary electric energy can be supplied at step S4, the processing proceeds to step S5. At step S5, the charge/discharge instruction generator 40 sets, to 0, the vehicle charge amount instruction value (for the line) to the charging unit 10 to which the vehicle is connected. The processing proceeds to step S12, which will be described later.

When it is determined that the necessary electric energy cannot be supplied at step S4, the processing proceeds to step S6. At step S6, the charge/discharge instruction generator 40 determines whether there is a charging unit 10 having the first block among the other charging units 10 than the charging unit 10 to which the vehicle is connected.

When it is determined that there is the charging unit 10 having the first block among the other charging units 10 at step S6, the processing proceeds to step S7. At step S7, the charge/discharge instruction generator 40 assigns the state 4 to one of all of the first blocks of the charging unit 10 having the largest number of first blocks. Then, the processing proceeds to step S8.

At step S8, the charge/discharge instruction generator 40 determines whether the electric energy of the block B to which the state 4 has been assigned by the processing at step S7 is equal to or larger than the shortage of the electric energy. When it is determined that the electric energy of the block B to which the state 4 has been assigned is smaller than the shortage of the electric energy at step S8, the processing returns to step S6.

When it is determined that the electric energy of the block B to which the state 4 has been assigned is equal to or larger than the shortage of the electric energy at step S8, the processing proceeds to step S9. At step S9, the charge/discharge instruction generator 40 sets the electric energy of the block B to which the state 4 has been assigned by the processing at step S7 as the vehicle charge amount instruction value (for the line) to the charging unit 10 being short of power. The processing proceeds to step S11, which will be described later.

On the other hand, when it is determined that there is no charging unit 10 having the first block among the other charging units 10 at step S6, the processing proceeds to step S10. At step S10, the charge/discharge instruction generator 40 sets electric energy calculated by adding the shortage of the electric energy and the electric energy (0 when the processing at step S7 has never been executed) of the block B to which the state 4 has been assigned by the processing at step S8 as the vehicle charge amount instruction value (for the line) to the charging unit 10 to which the vehicle is connected. Then, the processing proceeds to step S11.

At step S11, the charge/discharge instruction generator 40 sets the electric energy of the block B to which the state 4 has been assigned by the processing at step S7 as the discharge amount instruction value to the charging unit 10 being the power distribution source. The charging unit 10 being the power distribution source indicates the charging unit 10 to which the vehicle is not connected and which has the block B to which the state 4 has been assigned by the processing at step S7. The processing proceeds to step S12.

At step S12, the charge/discharge instruction generator 40 sets the electric energy of the block B to which the state 2 has been assigned by the processing at step S3 as the vehicle charge amount instruction value (for the battery) to the charging unit 10 to which the vehicle is connected. The processing is returned.

Next, an example of processing flow that the charge/discharge instruction generator 40 executes when the charging unit 10 is charged in the EV charging system 100 in the embodiment will be described with reference to FIG. 5.

As illustrated in FIG. 5, in the processing flow, first, the charge/discharge instruction generator 40 checks the trunk distribution power information input from the wattmeter 51 at step S21. The trunk distribution power information is information including a value of the electric energy measured by the wattmeter 51 (electric energy that the trunk distribution line 50 currently supplies). Then, the processing proceeds to step S22.

At step S22, the charge/discharge instruction generator 40 determines whether the value of the electric energy that the trunk distribution line 50 currently supplies is equal to or larger than a value calculated by subtracting a predetermined margin value from a value of contract electric energy, on the basis of the trunk distribution power information input from the wattmeter 51.

When the value of the electric energy that the trunk distribution line 50 currently supplies is equal to or larger than the value calculated by subtracting the predetermined margin value from the value of the contract electric energy at step S22, the processing proceeds to step S23. At step S23, the charge/discharge instruction generator 40 disables the battery charge instructions to the controllers 20 and the processing is returned to step S21.

On the other hand, when the value of the electric energy that the trunk distribution line 50 currently supplies is smaller than the value calculated by subtracting the predetermined margin value from the value of the contract electric energy at step S22, the processing proceeds to step S24. At step S24, the charge/discharge instruction generator 40 checks the states of the blocks B of the charging units 10, the processing proceeds to step S25.

At step S25, the charge/discharge instruction generator 40 outputs the battery charge instruction to the controller 20 that controls the charging unit 10 including the storage battery 12 having the largest number of blocks B to which the state 3 has been assigned. Then, the processing is returned to step S21. The storage batteries 12 are charged preferentially from the storage battery 12 included in the charging unit 10 having the largest number of blocks B to which the state 3 has been assigned, by repeatedly executing the processing at step S21 to S25.

Next, an example of processing flow that the charge/discharge instruction generator 40 executes when the states are updated in the EV charging system 100 in the embodiment will be described with reference to FIG. 6.

As illustrated in FIG. 6, in the processing flow, first, the charge/discharge instruction generator 40 checks the charging unit information input from the charging units 10 at step S31. Then, the processing proceeds to step S32.

At step S32, the charge/discharge instruction generator 40 determines whether there is the charging unit information to be updated. When it is determined that there is no charging unit information to be updated at step S32, the processing is returned to step S31. On the other hand, when it is determined that there is the charging unit information to be updated at step S32, the processing proceeds to step S33.

At step S33, the charge/discharge instruction generator 40 updates the states of the blocks B in accordance with update contents of the charging unit information. Then, the processing is returned to step S31. The states of the respective blocks B are always kept to the latest contents by repeatedly executing the pieces of processing at step S31 to S33.

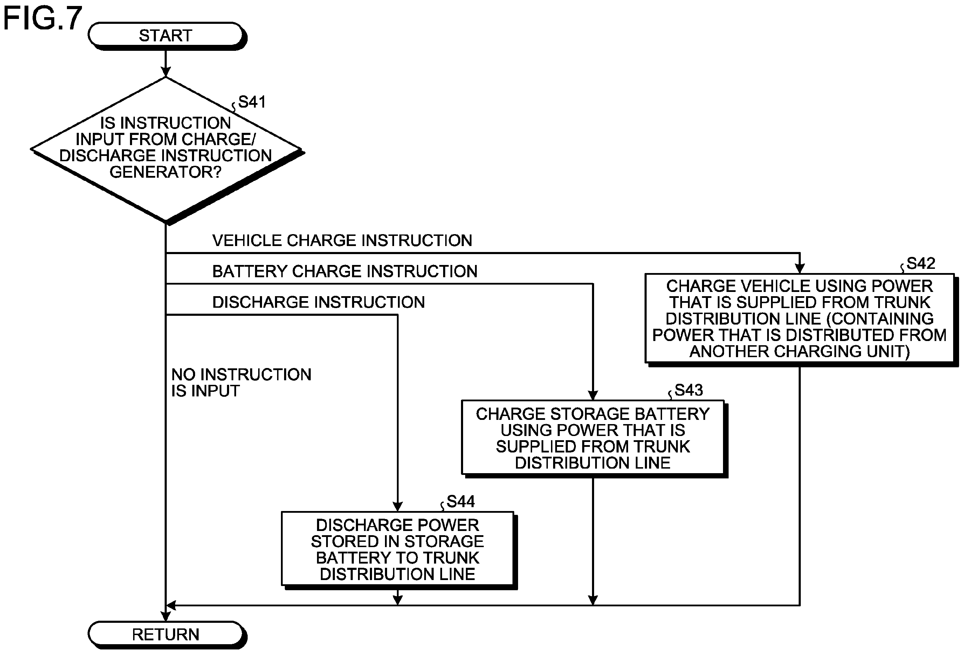

Next, an example of processing flow that the controller 20 of the EV charging system 100 in the embodiment executes will be described with reference to FIG. 7.

As illustrated in FIG. 7, in the processing flow, first, the controller 20 determines whether the instruction is input thereto from the charge/discharge instruction generator 40 at step S41.

When it is determined that the vehicle charge instruction is input from the charge/discharge instruction generator 40 at step S41, the processing proceeds to step S42. At step S42, the controller 20 controls the charging unit 10 on the basis of the vehicle charge amount instruction values (for the battery/system) (see steps S5, S7, S10, and S12 in FIG. 4) input from the charge/discharge instruction generator 40 together with the vehicle charge instruction, so that the vehicle connected to the connector 11 is charged using power that is supplied from the trunk distribution line 50 (containing power that is distributed from another charging unit 10). Then, the processing is returned.

When it is determined that the battery charge instruction is input from the charge/discharge instruction generator 40 at step S41, the processing proceeds to step S43. At step S43, the controller 20 controls the charging unit 10 on the basis of the battery charge instruction, so that the storage battery 12 is charged using power that is supplied from the trunk distribution line 50. Then, the processing is returned.

When it is determined that the discharge instruction is input from the charge/discharge instruction generator 40 at step S41, the processing proceeds to step S44. At step S44, the controller 20 controls the charging unit 10 on the basis of the discharge amount instruction value (see step S11 in FIG. 4) input from the charge/discharge instruction generator 40 together with the discharge instruction, so that power stored in the storage battery 12 is discharged to the trunk distribution line 50. Then, the processing is returned.

When it is determined that no instruction is input from the charge/discharge instruction generator 40 at step S41, the processing at step S42 to step S44 are not performed and the processing is returned.

As described above, in the embodiment, the charge/discharge instruction generator 40 is configured to manage the storage batteries 12 of the charging units 10 with partitioning each of the storage batteries 12 into the blocks B in the unit of given electric energy. To be more specific, the charge/discharge instruction generator 40 is configured to assign, to each of the blocks B, any one state of the state 1, the states 2 and 4, and the state 3, the state 1 indicating no use by the charging units 10, the states 2 and 4 indicating a use by any of the charging units 10, the state 3 indicating no storage of usable power. The charge/discharge instruction generator 40 is configured to output the various instructions to the controllers 20 such that power stored in the block B (first block) to which the state 1 has been assigned can be distributed to another charging unit 10 through the trunk distribution line 50 when there is the charging unit 10 having the first block. With this configuration, even when electric energy stored in one charging unit 10 to which the vehicle is connected is smaller than the necessary electric energy, the vehicle is not required to be charged after the charging unit 10 is charged until it stores therein the necessary electric energy by taking the time, or the vehicle is not required to be operated with its charged amount smaller than the necessary electric energy, thereby charging the vehicle efficiently and reliably.

That is to say, the embodiment can provide an effect equivalent to virtual increase in the electric energy in each of the charging units 10 because surplus power can be shared among the charging units 10. The vehicle can thus be charged efficiently and reliably without increasing cost due to increase in the capacity of each storage battery 12 or increase in power that is supplied from the trunk distribution line 50.

Furthermore, in the embodiment, when there is a plurality of charging units 10 having the first blocks, the charge/discharge instruction generator 40 is configured to output the discharge instruction such that power is distributed to another charging unit 10 preferentially from the charging unit 10 having the largest number of blocks B (first blocks) to which the state 1 has been assigned, as described above. The surplus power of the charging units 10 can thereby be used in a preferable balanced manner.

In the embodiment, when the storage batteries 12 of the charging units 10 are charged with power supplied from the trunk distribution line 50, the charge/discharge instruction generator 40 is configured to output the battery charge instruction such that charging is performed preferentially from the charging unit 10 having the largest number of blocks B to which the third state has been assigned, as described above. The charging units 10 can thereby be charged in a preferable balanced manner.

The charge/discharge instruction generator 40 in the above-described embodiment has a hardware configuration using a normal computer and a control program that the charge/discharge instruction generator 40 executes is provided as a computer program product having a computer-readable recording medium in which an installable or executable file is recorded. Examples of the recording medium include a compact disc read only memory (CD-ROM), a flexible disk (FD), a compact disc recordable (CD-R), and a digital versatile disc (DVD).

The above-described control program may be stored in a computer connected to a network such as the Internet and provided or distributed via the network. The above-mentioned control program may be embedded and provided in a read only memory (ROM) of a computer.

While certain embodiments and modification examples of the present invention have been described, these embodiments and modification examples have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A charging system (100) comprising:
a plurality of charging units (10) that are electrically connected to each other via a trunk distribution line (50), the charging units (10) each comprising a connector (11) to which a vehicle is connected, a storage battery (12) that stores therein power supplied from the trunk distribution line (50), and a charger (13) that supplies power supplied from the trunk distribution line (50) or the storage battery (12) to the vehicle through the connector (11);
a controller (20) that controls the charging units (10); and
a manager (40) that manages the storage battery (12) of each of the charging units (10) with partitioning the storage battery (12) into a plurality of blocks in a unit of given electric energy, that assigns a first state, a second state, or a third state to each of the blocks, and that outputs, when the charging units (10) includes a first charging unit including a first block to which the first state is assigned, an instruction to the controller (20) such that power stored in the first block is distributed to a second charging unit other than the first charging unit via the trunk distribution line, the first state indicating that none of the charging units (10) uses the first block, the second state indicating that any of the charging units (10) uses a block to which the second state is assigned, the third state indicating that usable power is not stored in a block to which the third state is assigned.

2. The charging system (100) according to claim 1, wherein
when the first charging unit comprises a plurality of first charging units (10), the manager (40) outputs the instruction such that power is distributed to the second charging unit preferentially from the first charging unit comprising the largest number of first blocks.

3. The charging system (100) according to claim 1, wherein
when the storage battery (12) of each of the charging units (10) is charged with the power supplied from the trunk distribution line (50), the manager (40) outputs the instruction such that charging is performed preferentially from the charging unit comprising the largest number of blocks to which the third state has been assigned.

4. The charging system (100) according to claim 2, wherein
when the storage battery (12) of each of the charging units (10) are charged with the power supplied from the trunk distribution line (50), the manager (40) outputs the instruction such that charging is performed preferentially from the charging unit comprising the largest number of blocks to which the third state has been assigned.
